# FASCICULE DE BREVET EUROPEEN

(11) **EP 0 730 818 B1**
(45) Date de publication et mention de la délivrance du brevet: **11.07.2001**
(21) Numéro de dépôt: 96440023.8
(22) Date de dépôt: 06.03.1996
(51) Int. Cl.: A01C 5/06, A01C 7/08, A01B 33/14

(54) **Dispositif perfectionné d'implantation de semence dans le sol, semoir et machine combinée de préparation de lit de semence et de semis utilisant ledit dispositif**
Verbesserung an einem Säsystem, Sämaschine und kombinierte Maschine zur Saatbettherrichtung und zum Säen mit einem solchen Säsystem
Incroved seed planting device, sowing machine for preparing a seedbed and for sowing using the device

(30) Priorité: 10.03.1995 FR 9502967
(43) Date de publication de la demande: 11.09.1996
(73) Titulaire: KUHN S.A., 67700 Saverne (FR)
(72) Inventeur: Schott, Thierry, 67700 Ottersthal (FR); Oberle, Edmond, 67700 Haegen (FR)

(56) Documents cités:
- EP-A- 0 383 393
- FR-A- 735 869
- FR-A- 2 647 627
- GB-A- 1 133 117
- US-A- 1 387 725

## Description

La présente invention se rapporte à un dispositif d'implantation de semence dans le sol destiné à équiper un semoir, ledit dispositif comporte
- une structure porteuse,
- un élément rotatif guidé en rotation dans ladite structure porteuse autour d'un axe de rotation, ledit élément rotatif comportant un support central et des outils fixés sur ledit support central et
- au moins une conduite de guidage et d'implantation de semence dans le sol passant aux alentours du support central de l'élément rotatif et durant le travail, au moins partiellement à proximité du bord latéral correspondant des outils respectifs dudit élément rotatif.

Un tel dispositif d'implantation de semence dans le sol est connu et décrit dans les demandes de brevet FR 2 647 626 et FR 2 647 627. Ce dispositif d'implantation de semence dans le sol décrit par ces deux documents comporte dans les grandes lignes une structure porteuse qui supporte un élément rotatif réalisé sous forme de rouleau et des conduites de guidage et d'implantation de semence dans le sol. Ledit rouleau est guidé en rotation dans la structure porteuse, de sorte à pouvoir tourner autour de son axe longitudinal qui s'étend au moins sensiblement perpendiculairement à la direction d'avance au travail. Il comporte un support central sur lequel sont fixés des outils agencés suivant des groupes radiaux espacés le long dudit support central. Chaque outil est fixé de manière démontable au support central au moyen de deux vis vissées dans un siège taraudé qui est soudé audit support central. Les conduites de guidage et d'implantation de la semence dans le sol sont, quant à elles, aménagées à des intervalles sensiblement constants suivant une rangée s'étendant au moins sensiblement parallèlement à l'axe longitudinal du rouleau. Elles sont chacune liées à la structure porteuse au moyen d'une articulation d'axe dirigé au moins sensiblement parallèlement à l'axe longitudinal du rouleau. Chaque conduite de guidage et d'implantation de semence dans le sol s'étend devant le support central du rouleau et passe durant le travail, au moins partiellement à proximité des bords latéraux des outils correspondants dudit rouleau.

Ce dispositif d'implantation de semence dans le sol connu présente un certain nombre d'avantages. En effet, comme chaque conduite de guidage et d'implantation de semence dans le sol passe, durant le travail, au moins partiellement à proximité des bords latéraux des outils correspondants du rouleau, ces derniers nettoient continuellement ladite conduite et empêchent, de ce fait, une accumulation de terre et de débris végétaux aux conduites lors du travail.

Néanmoins, la réalisation de ce dispositif d'implantation de semence dans le sol connu revient relativement cher, notamment la fixation des outils sur le support central. En effet, comme décrit ci-avant, la fixation de chaque outil sur le support central fait d'une part appel à un siège sur lequel a été effectué un certain nombre d'usinages et de soudures et d'autre part à deux vis de fixation.

De surcroît, le montage et la fixation de chaque outil sur son siège demande beaucoup de main d'oeuvre.

La présente invention a pour but de réduire le coût de réalisation des outils et le temps de montage de ces derniers sur le support central.

A cet effet, le dispositif d'implantation de semence dans le sol est caractérisé en ce que le support central est un profilé rond, que chaque outil comporte une forme complémentaire épousant le profilé, une partie active au moins sensiblement plane et s'étendant au moins sensiblement radialement au support central et, une partie de fixation sensiblement plane laquelle prend son origine à l'autre extrémité de la forme complémentaire de l'outil, et que chaque outil est fixé sur ledit support central par un moyen de bridage permettant de fixer les outils au support central, ledit moyen de bridage est constitué par les outils eux-mêmes et d'au moins un élément d'assemblage liant entre eux au moins deux outils d'un même groupe de telle sorte que la partie arrière de la partie active d'un outil prend appui sur la partie de fixation de l'outil adjacent.

Avec une telle conception du dispositif d'implantation de semence dans le sol, les outils peuvent être fixés sur le support central avec un minimum d'éléments, ce qui se traduit par un gain de coût de réalisation et un gain de temps de montage. Il suffit en effet de monter les outils directement sur le support central au moyen de leur forme complémentaire épousant au moins sensiblement et au moins partiellement ledit profilé et de les fixer audit support central à l'aide du moyen de bridage.

Avantageusement, les outils sont fixés sur le support central de manière au moins sensiblement radiale à l'axe de rotation de l'élément rotatif et sont disposés suivant au moins un groupe.

Une telle disposition permet ainsi à chaque conduite de guidage et d'implantation de semence dans le sol de passer au moins partiellement à proximité des bords latéraux correspondants des outils respectifs afin que ces derniers puissent nettoyer, lors du travail, ladite conduite.

Selon une autre caractéristique supplémentaire de l'invention, l'élément rotatif comporte au moins deux outils adjacents par groupe lesquels sont au moins sensiblement régulièrement espacés autour du support central dudit élément rotatif permettant ainsi, lors du travail, un entraînement au moins sensiblement régulier dudit élément rotatif.

A cet effet, pour assurer l'entraînement de l'élément rotatif lors du travail, chaque outil comporte une partie active au moins sensiblement plane s'étendant au moins sensiblement radialement au support central.

Avantageusement, cette partie active comporte une partie extérieure d'une certaine largeur, dirigée essentiellement transversalement à une direction d'avance au travail. Ladite partie extérieure est dotée d'un bord extérieur dirigé d'une part essentiellement transversalement à ladite direction d'avance au travail et d'autre part au moins sensiblement horizontalement et au moins sensiblement perpendiculairement à ladite direction d'avance au travail. Au travail la partie extérieure d'au moins un outil repose sur le sol et s'enfonce quelque peu dans ce dernier, permettant ainsi, lors du déplacement du dispositif d'implantation dans la direction d'avance au moyen d'un véhicule moteur par exemple, d'entraîner en rotation l'élément rotatif. De plus, une telle position du bord extérieur évite que l'outil ne transperce les débris végétaux et/ou les mottes de terre souvent présentes dans la parcelle de travail et entraîne ceux-ci lors de sa rotation.

Par ailleurs, il s'est avéré que ces outils assuraient également un bon recouvrement de la semence implantée dans le sol par la conduite de guidage et d'implantation de semence. En effet, au niveau de la surface du sol, comme dit ci-avant, la partie extérieure d'au moins un outil s'enfonce quelque peu dans le sol et, comme elle possède une certaine largeur dirigée transversalement à une direction d'avance au travail, elle soulèvera une certaine quantité de terre lorsqu'elle ressortira du sol après que la conduite de guidage et d'implantation de semence ait déposé la semence dans le sol. Aussitôt soulevée, cette terre retombera en fermant notamment le sillon creusé par ladite conduite et en assurant ainsi le recouvrement de la semence qui vient d'être implantée.

Avantageusement, la partie active d'un outil comporte en sus une partie arrière laquelle prend son origine à l'une des extrémités de la forme complémentaire dudit outil.

Selon une caractéristique supplémentaire de l'invention, chaque outil comporte une partie de fixation au moins sensiblement plane, laquelle prend son origine à l'autre extrémité de la forme complémentaire de l'outil.

Selon une autre caractéristique supplémentaire de l'invention, le moyen de bridage permettant de fixer les outils au support central est constitué d'une part par les outils eux mêmes et d'autre part d'au moins un élément d'assemblage liant au moins deux outils d'un même groupe entre eux. A cet effet, chaque outil prend appui avec sa forme complémentaire directement sur ledit support central et la partie arrière de la partie active de l'outil prend appui sur la partie de fixation de l'outil adjacent du même groupe en vue de son bridage sur ledit support central.

Selon une autre caractéristique supplémentaire de l'invention, la partie arrière de la partie active et la partie de fixation d'un outil comportent chacune un trou. A cet effet, l'élément d'assemblage liant au moins deux outils d'un même groupe entre eux s'étend d'une part au travers du trou de la partie arrière d'un outil et d'autre part au travers du trou de la partie de fixation de l'outil adjacent de manière à solidariser ces deux outils adjacents entre eux. Une telle conception permet notamment de fixer les outils sur le support central d'une manière très simple avec un minimum d'éléments. De surcroît, chaque groupe d'outils peut être placé et déplacé à l'endroit souhaité sur le support central, aussi bien axialement que radialement, ce qui permet d'ajuster la position de chaque groupe d'outils par rapport aux conduites de guidage et d'implantation de semence dans le sol correspondantes.

Selon une autre caractéristique supplémentaire de l'invention, chaque outil est flexible. De préférence chaque outil est réalisé dans un matériau flexible de manière à autoriser une certaine flexion et déformation élastique dudit outil, notamment lors du travail lorsque l'outil en question doit surmonter un obstacle.

Selon une autre caractéristique supplémentaire de l'invention, cette flexion et déformation élastique est limitée afin d'éviter une déformation permanente de l'outil ce qui reviendrait à le déformer pour toujours. Cette flexion et déformation élastique est limitée au moyen d'une butée, laquelle est formée par une plaque d'appui qui est au moins sensiblement plane.

Avantageusement, la plaque d'appui est adjacente à la partie de fixation de l'outil correspondant par l'intermédiaire d'une forme arrondie.

Selon une autre caractéristique supplémentaire de l'invention, il est prévu une deuxième forme arrondie au moins sensiblement tangente à la plaque d'appui de la butée.

Ces formes arrondies évitent de créer des arêtes vives, voir tranchantes, susceptibles d'engendrer des concentrations de contraintes de la partie active de l'outil adjacent lors d'une déformation de ce dernier. De telles concentrations de contraintes pourraient être à l'origine d'une éventuelle rupture de la partie active de l'outil adjacent.

La butée pourra également être formée par une plaque d'appui de forme arrondie au moins sensiblement tangente à la partie de fixation de l'outil. Un tel agencement de la plaque d'appui à la partie de fixation de l'outil évite également de créer une arête vive, voire tranchante, entre ladite plaque d'appui et la partie de fixation pour les mêmes raisons que celles citées ci-dessus.

Selon une autre caractéristique supplémentaire de l'invention, en vue suivant l'axe de rotation de l'élément rotatif, la plaque d'appui d'un outil s'éloigne progressivement de la partie arrière de la partie active de l'outil adjacent de sorte à permettre une certaine flexion et déformation élastique dudit outil.

Selon une autre caractéristique supplémentaire de l'invention, au moins la partie de fixation et la partie arrière d'un outil s'étendent chacune au moins sensiblement radialement à l'axe de rotation de l'élément rotatif permettant ainsi de fixer les outils l'un à l'autre tout autour du support central sans faire appel à des éléments supplémentaires.

Selon une autre caractéristique supplémentaire de l'invention, chaque outil comporte une plaque.

Avantageusement, chaque outil est formé par une tôle. Il peut également être prévu que chaque outil est en matière plastique ce qui permet d'obtenir un gain de poids d'où un dispositif d'implantation de semence dans le sol moins lourd.

Selon une autre caractéristique supplémentaire de l'invention, au moins la forme complémentaire de chaque outil est d'une dureté différente de la dureté du support central.

De préférence, au moins la forme complémentaire de chaque outil est d'une dureté supérieure à celle du support central. Une telle conception permet d'assurer une meilleure fixation des outils sur le support central. En effet, lors du montage des outils sur le support central, ces derniers s'agrippent sur le support central en laissant des empreintes sur ce dernier.

Selon une autre caractéristique supplémentaire de l'invention, le support central est un profilé rond.

Selon une autre caractéristique supplémentaire de l'invention, quelques uns au moins desdits éléments rotatifs, sont réunis en un même rouleau et chaque groupe d'outils est décalé angulairement autour de l'axe longitudinal du rouleau par rapport au groupe d'outils voisin. De cette sorte, les outils correspondants des différents groupes engendrent une hélice autour de l'axe longitudinal du rouleau permettant ainsi à celui-ci d'être entraîné de manière régulière lors du travail et d'avoir toujours plusieurs outils en prise avec le sol.

Selon une autre caractéristique supplémentaire de l'invention, les outils d'un même groupe sont au moins sensiblement identiques.

L'invention concerne également un semoir comportant un dispositif de stockage de semence, un dispositif de dosage de semence, une dispositif de distribution et de véhiculage de semence véhiculant la semence depuis le dispositif de dosage jusqu'à un dispositif d'implantation de semence dans le sol.

L'invention concerne encore une machine combinée de travail du sol et de semis comportant une machine agricole de préparation d'un lit de semence et un semoir tel que décrit ci-dessus.

D'autres objets et caractéristiques de l'invention ressortiront de la description ci-après avec référence aux dessins annexés qui représentent, à titre d'exemples non limitatifs, quelques formes de réalisation et cas d'application du dispositif d'implantation de semence dans le sol.

Sur ces dessins :
- la figure 1 représente une vue latérale d'une machine agricole combinée de travail du sol et de semis attelée à un véhicule moteur et comportant un dispositif d'implantation de la semence dans le sol selon l'invention ;
- la figure 2 représente selon une première forme de réalisation, à une plus grande échelle, une vue latérale de l'élément rotatif seul en coupe tel que représenté sur la figure 1 ;
- la figure 3 représente une vue en perspective d'un outil seul équipant l'élément rotatif de la figure 2 ;
- la figure 4 représente selon une deuxième forme de réalisation à une plus grande échelle, une vue latérale de l'élément rotatif seul en coupe ;
- la figure 5 représente une vue en perspective d'un outil seul équipant l'élément rotatif de la figure 4.

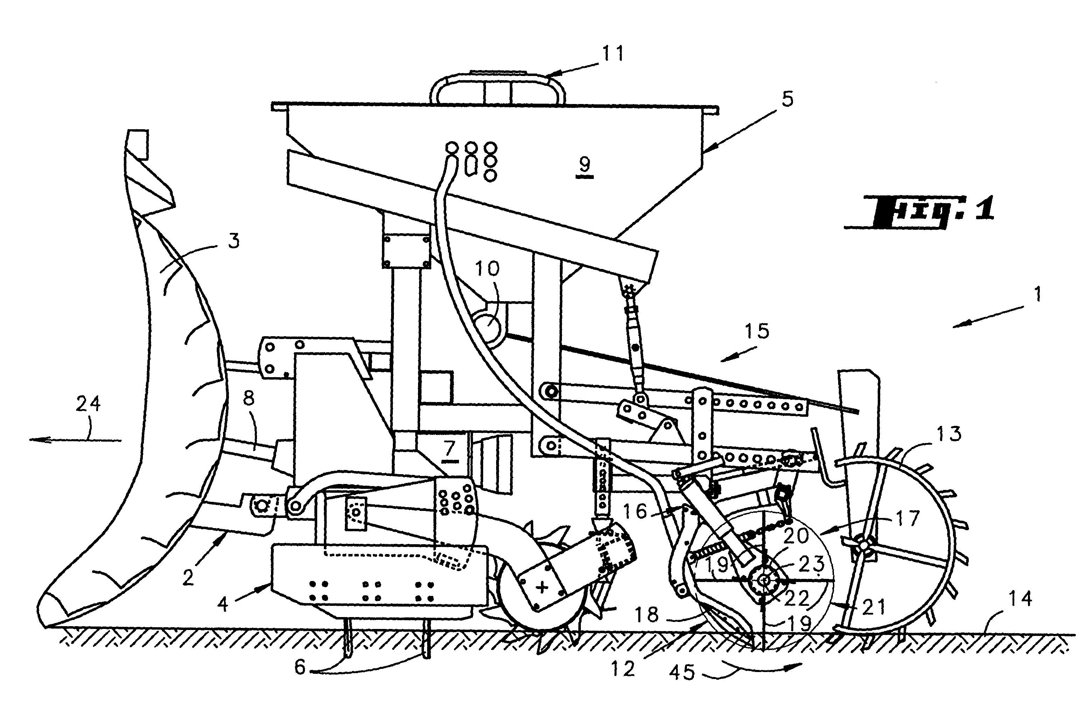

La figure 1 représente une machine agricole combinée de travail du sol et de semis (1) liée à l'attelage arrière (2) d'un véhicule moteur (3).

Cette machine agricole combinée de travail du sol et de semis (1) comprend une machine (4) de préparation d'un lit de semence et un semoir (5).

La machine (4) de préparation d'un lit de semence comporte des outils animés (6) qui sont entraînés par l'intermédiaire de moyens d'entraînement (7) recevant eux mêmes le mouvement d'un arbre de prise de puissance (non représenté) du véhicule moteur (3) au moyen d'un arbre de transmission à joints universels (8).

Le semoir, quant à lui, comporte un dispositif de stockage de la semence qui est une trémie (9) dans laquelle se trouve la semence à implanter dans le lit de semence préparé par la machine (4) de préparation du lit de semence. Ce semoir (5) est, selon l'exemple représenté, du type pneumatique. A cet effet, à la base de la trémie (9) est prévu un dispositif (10) de dosage de la semence à la sortie duquel la semence est transportée par un dispositif (11) de distribution et de véhiculage jusqu'à un dispositif (12) d'implantation de la semence dans le sol. Le dispositif de dosage est entraîné par une roue (13) roulant sur le sol (14) lors du travail, et le dispositif (11) de distribution et de véhiculage est entraîné par les moyens d'entraînement (7) évoqués ci-dessus. Le dispositif (12) d'implantation de la semence dans le sol est lié au semoir (5) au moyen d'une structure de liaison (15) et comporte dans les grandes lignes une structure porteuse (16), un élément rotatif (17) et une rangée de conduites (18) de guidage et d'implantation de semence dans le sol.

Les conduites (18) de guidage et d'implantation de semence dans le sol et l'élément rotatif (17) sont agencés à la structure porteuse (16) d'une manière connue par l'homme de l'art.

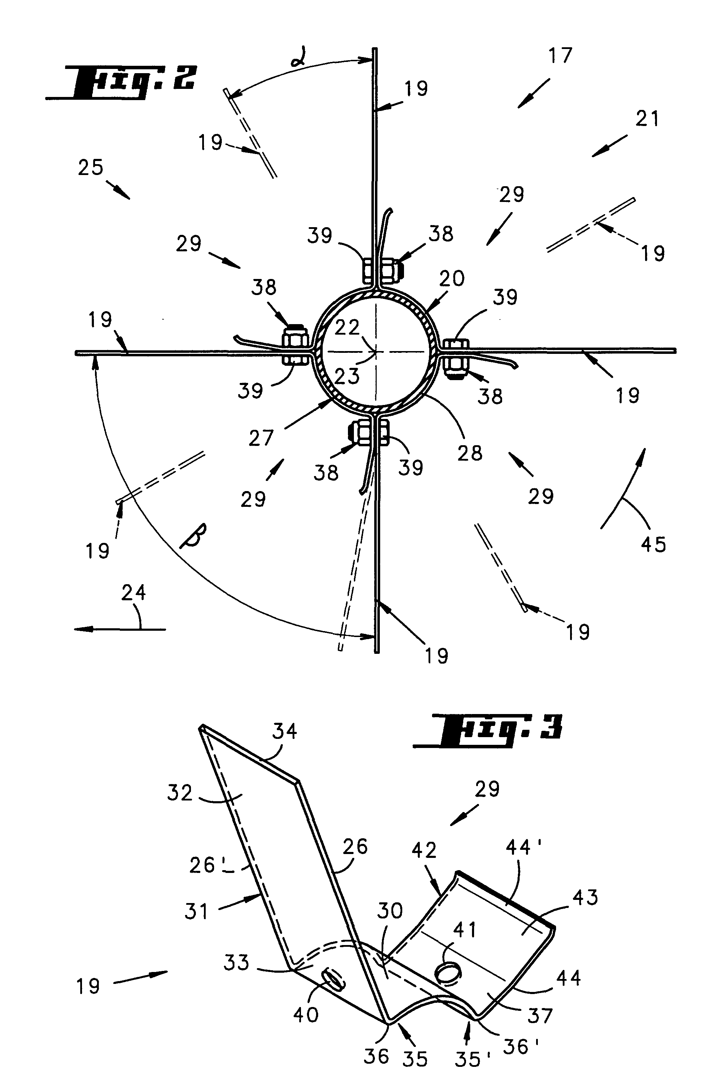

Selon la forme de réalisation représentée, l'élément rotatif (17) comporte un certain nombre d'outils (19) fixés sur un même support central (20) de manière à former un rouleau (21) d'axe longitudinal (22). Ce rouleau (21) est guidé en rotation dans la structure porteuse (16) autour d'un axe de rotation (23) au moins sensiblement confondu avec l'axe longitudinal (22). On notera en sus que l'axe de rotation (23) s'étend au moins sensiblement orthogonalement à une direction d'avance au travail (24). A la lumière de la figure 2, on voit que les outils (19) sont fixés sur le support central (20) suivant des groupes (25) s'étendant radialement à l'axe de rotation (23) du rouleau (21). On notera en sus que les groupes (25) sont espacés au moins sensiblement régulièrement le long dudit support central (20).

On notera en sus que chaque groupe d'outils (25) est décalé angulairement d'un angle (α) autour de l'axe longitudinal (22) du rouleau (21) par rapport au groupe d'outils (25) voisin (représenté en trait mixte) de manière à générer une hélice autour dudit axe longitudinal (22), ce décalage angulaire étant d'environ 30°.

Les conduites (18) de guidage et d'implantation de semence dans le sol sont agencées de telle manière que chaque conduite (18) passe aux alentours du support central (20) de l'élément rotatif (17) et, durant le travail, au moins sensiblement à proximité du bord latéral (26, 26') correspondant des outils (19) respectifs.

Selon l'exemple représenté, on voit encore qu'un groupe d'outils (25) est montés sur un profilé rond (27) lequel est de préférence un tube rond (28). Le groupe d'outils (25) est formé de quatre outils (19) au moins sensiblement régulièrement espacés autour du support central (20) et s'étendant chacun au moins sensiblement radialement à ce dernier. Dans ce cas de figure deux outils (19) d'un même groupe (25) sont décalés d'une angle (β) sensiblement égal à 90°.

Chaque outil (19) est fixé de manière démontable au support central (20) par un moyen de bridage (29). A cet effet, pour assurer une bonne fixation des outils (19) sur le profilé rond (27), chaque outil (19) comporte une forme complémentaire (30) destinée à épouser au moins partiellement ledit profilé rond (27).

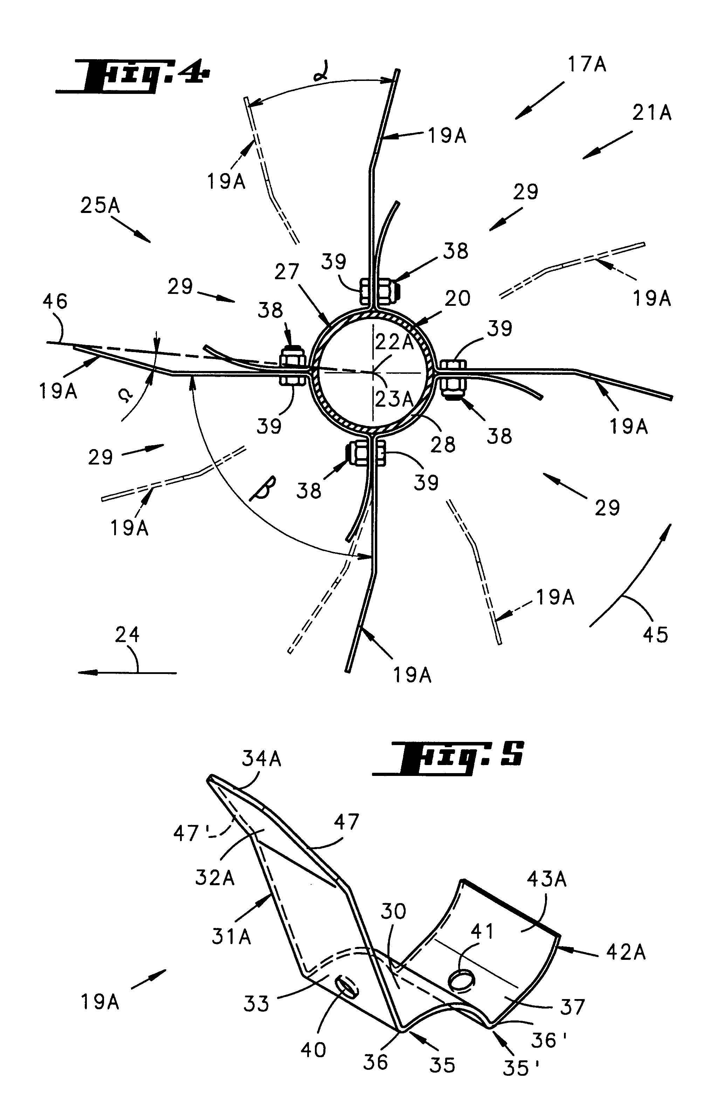

Chaque outil (19) comporte en sus une partie active (31) telle que représentée sur la figure 3. Cette partie active (31) est au moins sensiblement plane et s'étend, lorsque ledit outil (19) est monté sur le support central (20), au moins sensiblement radialement audit support central (20).

La partie active (31) de l'outil (19) comporte deux parties, une partie extérieure (32) et une partie arrière (33). La partie extérieure (32) est dotée d'un bord extérieur (34) droit dirigé essentiellement transversalement, au moins sensiblement horizontalement et au moins sensiblement perpendiculairement à la direction d'avance (24) lorsque l'outil (19) est monté sur le support central (20), en sus le bord extérieur (34) est dirigé parallèlement à l'axe longitudinal (22) du rouleau (21). On notera en sus que le bord extérieur (34) s'étend sur toute la largeur de la partie active (31). La partie arrière (33), quant à elle, prend son origine à l'une (35) des extrémités (35 ; 35') de la forme complémentaire (30) de l'outil (19).

On remarquera que la partie arrière (33) prend son origine à l'extrémité (35) de la forme complémentaire (30) par l'intermédiaire d'une première forme de raccordement (36) arrondie.

Chaque outil (19) comporte encore une partie de fixation (37), laquelle est au moins sensiblement plane et prend son origine à l'autre extrémité (35') de la forme complémentaire (30) de l'outil (19) par l'intermédiaire d'une deuxième forme de raccordement (36') arrondie.

En position montée, les outils (19) sont fixés au support central (20) par le moyen de bridage (29). Ce moyen de bridage (29) est constitué d'une part par les outils (19) eux mêmes et d'autre part d'un élément d'assemblage (38) liant deux outils (19) adjacents entre eux.

A cet effet, chaque outil (19) prend directement appui avec sa forme complémentaire (30) sur le tube rond (28) du support central (20). En outre, chaque outil (19) est lié à l'outil (19) adjacent de telle sorte que la partie arrière (33) de la partie active (31) d'un outil (19) prend appui sur la partie de fixation (37) de l'outil (19) adjacent appartenant au même groupe (25). L'élément d'assemblage (38) liant entre eux deux outils (19) adjacents, est composé, selon l'exemple représenté, d'un boulon (39). Ce faisant, la partie arrière (33) de la partie activé (31) et la partie de fixation (37) de chaque outil (19), comporte chacune un trou (40, 41) respectif. Le boulon (39) lie entre eux les deux outils (19) adjacents en s'étendant d'une part dans le trou (40) de la partie arrière (33) de la partie active (31) et d'autre part dans le trou (41) de la partie de fixation (37). Il convient de noter que les trous (40, 41) de chaque outil (19) sont situés aux alentours de la forme complémentaire (30) correspondante.

Selon la présente idée inventive, chaque outil (19) comporte en sus une plaque flexible, plus précisément, chaque outil (19) est formé par une tôle réalisée à partir d'un matériau flexible. Une telle conception autorise, lorsque l'outil (19) vient en contact avec le sol (14), une certaine flexion et déformation élastique de ce dernier ce qui permet une meilleure adaptation au sol de l'élément rotatif (17). Cette déformation de l'outil (19) est toutefois limitée par une butée (42) de manière à éviter une déformation trop importante qui risque de casser ou de déformer pour toujours l'outil (19). Ladite butée (42) est, selon l'exemple représenté, une plaque d'appui (43) faisant partie de l'outil (19). La plaque d'appui (43) est au moins sensiblement plane et adjacente à la partie de fixation (37) par l'intermédiaire d'une forme arrondie (44). Cette forme arrondie (44) évite de créer une arête vive qui pourrait être à l'origine d'une éventuelle rupture de la partie active (31) de l'outil (19) adjacent lors d'une déformation de ce dernier. Par ailleurs, il est prévu qu'au moins aux alentours de la forme arrondie (44), selon une vue suivant l'axe de rotation (23) de l'élément rotatif (17), la plaque d'appui (43) s'éloigne progressivement de la partie arrière (33) de la partie active (31) de l'outil (19) adjacent.

Chaque outil (19) est en outre doté d'une deuxième forme arrondie (44') au moins sensiblement tangente à la plaque d'appui (43) de la butée (42) selon une vue suivant l'axe de rotation (23) de l'élément rotatif (17), la deuxième forme arrondie (44') s'éloigne progressivement de la partie active (31) de l'outil (19) adjacent. Cette deuxième forme arrondie (44') évite de créer une arête vive au bout de la plaque d'appui (43) qui pourrait être à l'origine d'une éventuelle rupture de la partie active (31) de l'outil (19) adjacent lorsque cette dernière vient en appui sur ladite plaque d'appui (43).

Il convient encore de noter que, selon une vue suivant l'axe de rotation (23) de l'élément rotatif (17), chaque outil (19) a une forme générale en "V". En d'autres termes, la partie de fixation (37) et la partie arrière (33) d'un outil (19) s'étendent chacune au moins sensiblement radialement à l'axe de rotation (23) de l'élément rotatif (17).

On notera également que les outils (19) bénéficient d'une dureté différente de celle du support central (20) sur lequel ils sont fixés afin d'assurer une meilleure fixation desdits outils sur ledit support central (20). De préférence, la dureté des outils (19) est supérieure à celle du support central (20).

Le montage des outils (19) sur le tube rond (28) peut s'effectuer de la manière suivante :

Les outils (19) sont dans un premier temps assemblés par groupe (25) et dans un deuxième temps chaque groupe d'outils (25) est monté sur le tube rond (28). A cet effet, on dispose d'abord quatre outils (19) l'un à côté de l'autre de manière que chaque partie arrière (33) de la partie active (31) d'un outil (19) prenne appui sur la partie de fixation (37) de l'outil (19) adjacent.

Ensuite on met en place les quatre boulons (39) de manière que chaque boulon (39) traversé les trous (40, 41) de deux outils (19) adjacents et lie ces derniers entre eux. Trois de ces boulons (39) seront serrés, alors que le quatrième boulon (39) restera dans un premier temps déserré. L'assemblage du groupe (25) est effectué.

Ne reste maintenant plus qu'à monter ce groupe d'outils (25) sur le tube rond (28) en le glissant le long de ce dernier à l'endroit souhaité et dans la position désirée de telle sorte que les bords latéraux (26, 26') des outils (19) passent aux alentours des conduites (18). Enfin, on serre le quatrième boulon (39) pour conclure le montage de ce groupe d'outils (25).

Le montage du groupe (25) suivant s'effectuera de la même manière tel qu'expliqué ci-dessus en veillant toutefois à décaler ledit groupe (25) angulairement autour de l'axe longitudinal (22) de l'élément rotatif (17) par rapport au groupe d'outils (25) voisin.

Une fois tous les groupes d'outils (25) montés sur le tube rond (28), le décalage angulaire desdits groupes d'outils (25) devra générer une hélice autour de l'axe longitudinal (22).

Chaque groupe d'outils (25) peut, si besoin il y a, être démonté du tube rond (28) sans qu'on soit obligé de déposer les groupes d'outils (25) avoisinants. Pour cela il suffit, dans ce cas de figure, de démonter au moins trois des quatre boulons (39) et de retirer le groupe (25) correspondant du tube rond (28).

Le fonctionnement du dispositif d'implantation de semence dans le sol (12) ne sera pas décrit ici dans son intégralité. En cas de besoin, on pourra se reporter aux descriptions complètes qui ont été faites dans les demandes de brevets FR 2 647 626 et FR 2 647 627.

On notera toutefois que, lors d'une importante déformation d'un outil (19), la partie active (31) de ce dernier se déforme dans le sens contraire au sens de rotation (45) du rouleau (21) tel que représenté en traits interrompus fins sur un des outils (19) de la figure 2, jusqu'à ce que ladite partie active (31) dudit outil (19) vienne en appui sur la plaque d'appui (43) de la butée (42) de l'outil (19) adjacent.

Les figures 4 et 5 représentent une deuxième forme de réalisation selon la présente idée inventive. Cet outil (19A), destiné à équiper le dispositif d'implantation de la semence dans le sol tel que décrit ci-avant, comporte un certain nombre d'éléments et de formes qui ont été décrites précédemment. Ces éléments et ces formes garderont par conséquent les mêmes numéros de repère et ne seront pas redécrits. L'outil (19A) comporte également un certain nombre d'éléments et de formes qui sont comparables à des éléments et des formes des outils (19). Ces éléments et ces formes seront affectés du même numéro de repère que ces éléments et ces formes comparables des outils (19) suivi de la lettre A. Ils ne seront décrits que si cela s'avère nécessaire.

Le principe de fixation des outils (19A) sur le support central (20) représenté sur la figure 4 est semblable à celui décrit ci-avant. L'outil (19A) se différencie de l'outil (19) par sa partie active (31A) et par sa butée (42A).

En effet, on remarquera que la partie extérieure (32A) est en vue suivant l'axe longitudinal (22A) de l'élément rotatif (17A), droite et dirigée vers l'arrière, compte tenu du sens de rotation (45) du rouleau (21A), en avant d'un plan (46) contenant l'axe longitudinal (22A) de l'élément rotatif (17A) et s'appuyant sur le bord extérieur (34A) de ladite partie extérieure (32A). Dans l'exemple représenté, la partie extérieure (32A) de chaque outil (19A) forme avec le plan (46) un angle (Ω) d'une dizaine de degrés. Du reste, dans l'exemple représenté, on voit également que la longueur de la partie extérieure (32A) est environ égale au tiers de la longueur totale de l'outil (19A).

Le bord extérieur (34A) de l'outil (19A) possède les mêmes caractéristiques que celui de l'outil (19) sauf qu'il ne s'étend pas sur toute la largeur de la partie active (31A). En effet, la partie extérieure (32A) possède de part et d'autre un chanfrein (47, 47').

La butée (42A), quant à elle, est une plaque d'appui (43A) de forme arrondie et tangente à la partie de fixation (37). Cette forme arrondie évite de créer une arrête vive qui pourrait être à l'origine d'une éventuelle rupture de la partie active (31A) de l'outil (19A) adjacent lors d'une déformation de ce dernier. Par ailleurs, il est prévu, selon une vue suivant l'axe de rotation (23A) de l'élément rotatif (17A), que la plaque d'appui (43A) de forme arrondie s'éloigne progressivement de la partie arrière (33) de la partie active (31A) de l'outil (19A) adjacent. Une telle conception permet à la partie active (31A) de l'outil (19A) adjacent de s'appuyer, lors du travail, sur la plaque d'appui (43A) de forme arrondie de l'outil (19A) et d'épouser, grâce à sa flexibilité, au moins sensiblement sa forme arrondie au fur et à mesure de la déformation de ladite partie active (31A), tel que représenté en traits interrompus fins sur un des outils (19A) de la figure 4.

Finalement, différentes modifications restent possibles, notamment en ce qui concerne la constitution des divers éléments ou par substitution d'équivalents techniques, sans pour autant sortir du domaine de protection défini dans les revendications.

Ainsi il est parfaitement concevable d'équiper l'élément rotatif (17 ; 17A) de 2, 3, 5 outils (19 ; 19A) ou plus par groupe (25) en fonction des besoins et des conditions de travail.

Pour alléger davantage le dispositif (12 ; 12A) d'implantation de semence dans le sol, il est également concevable de réaliser les outils (19 ; 19A) en matière plastique tout en conservant la flexibilité et la résistance de chaque outil (19 ; 19A).

Il est également concevable d'équiper le même support central (20) d'outils (19) et (19A) tels qu'ils ont été décrits ci-avant.

Dans le cadre de l'invention, la machine (4) de préparation du lit de semence et le semoir (5) pourront être différents de ceux décrits. Enfin, il est parfaitement possible que le dispositif (12, 12A) d'implantation de semence dans le sol équipe un semoir (5) utilisé en solo.

Il est encore parfaitement concevable de réaliser un outil comportant différentes parties et formes telles que décrites ci-avant comme par exemple un outil comportant notamment la partie active (31A), la butée (42) et la deuxième forme arrondie (44') telles que décrites précédemment.

Il est également envisageable de remplacer la deuxième forme arrondie (44') de l'outil (19) par une surface plane adjacente à la plaque d'appui (43) de la butée (42) par l'intermédiaire d'une forme arrondie supplémentaire.

## Revendications

1. Dispositif d'implantation de semence dans le sol destiné à équiper un semoir, ledit dispositif d'implantation de semence dans le sol comportant
- une structure porteuse (16) ;
- un élément rotatif (17 ; 17A) guidé en rotation dans ladite structure porteuse (16) autour d'un axe de rotation (23 ; 23A) , ledit élément rotatif (17 ; 17A) comportant un support central (20) et des outils (19 ; 19A) fixés sur ledit support central (20); et
- au moins une conduite de guidage et d'implantation de semence dans le sol (18) passant aux alentours du support central (20) de l'élément rotatif (17 ; 17A) et, durant le travail, au moins partiellement à proximité du bord latéral correspondant des outils (19 ; 19A) respectifs dudit élément rotatif (17 ; 17A),
***caractérisé en ce*** que :
- le support central (20) est un profilé rond (27);
- chaque outil (19 ; 19A) comporte une forme complémentaire (30) épousant le profilé (27), une partie active (31 ; 31A) au moins sensiblement plane et s'étendant au moins sensiblement radialement au support central (20) et, une partie de fixation (37) sensiblement plane laquelle prend son origine à l'autre extrémité (35') de la forme complémentaire (30) de l'outil (19 ; 19A);
- chaque outil (19 ; 19A) est fixé sur ledit support central (20) par un moyen de bridage (29) permettant de fixer les outils (19 ; 19A) au support central (20), ledit moyen de bridage (29) est constitué par les outils (19 ; 19A) eux-mêmes et d'au moins un élément d'assemblage (38) liant entre eux au moins deux outils (19 ; 19A) d'un même groupe de telle sorte que la partie arrière (33) de la partie active (31 ; 31A) d'un outil (19 ; 19A) prend appui sur la partie de fixation (37) de l'outil (19 ; 19A) adjacent.

2. Dispositif d'implantation de semence dans le sol selon la revendication 1, ***caractérisé en ce*** que les outils (19 ; 19A) sont fixés sur le support central (20) de manière au moins sensiblement radiale à l'axe de rotation (23 ; 23A) de l'élément rotatif (17 ; 17A) et suivant au moins un groupe (25 ; 25A).

3. Dispositif d'implantation de semence dans le sol selon la revendication 1 ou 2, ***caractérisé en ce*** que l'élément rotatif (17 ; 17A) comporte au moins deux outils (19 ; 19A) adjacents par groupe (25 ; 25A) lesquels sont au moins sensiblement régulièrement espacés autour du support central (20) dudit élément rotatif (17 ; 17A).

4. Dispositif d'implantation de semence dans le sol selon l'une quelconque des revendications 1 à 3, ***caractérisé en ce*** que la partie active (31 ; 31A) de l'outil (19 ; 19A) comporte une partie extérieure (32 ; 32A) d'une certaine largeur, dirigée essentiellement transversalement à une direction d'avance (24) au travail, ladite partie extérieure (32 ; 32A) étant dotée d'un bord extérieur (34 ; 34A) lequel est également dirigé essentiellement transversalement à ladite direction d'avance (24) au travail, de préférence au moins sensiblement horizontalement et au moins sensiblement perpendiculairement à ladite direction d'avance (24) au travail.

5. Dispositif d'implantation de semence dans le sol selon l'une quelconque des revendications 1 à 4, ***caractérisé en ce*** que la partie active (31 ; 31A) de l'outil (19 ; 19A) comporte une partie arrière (33) laquelle prend son origine à l'une (35) des extrémités (35, 35') de la forme complémentaire (30) dudit outil (19 ; 19A).

6. Dispositif d'implantation de semence dans le sol selon l'une quelconque des revendications 1 à 5, ***caractérisé en ce*** que chaque outil (19 ; 19A), prend appui avec sa forme complémentaire (30) directement sur ledit support central (20) en vue de son bridage sur ledit support central (20).

7. Dispositif d'implantation de semence dans le sol selon l'une quelconque des revendications 1 à 6, ***caractérisé en*** *ce* que la partie arrière (33) de la partie active (31 ; 31A) et la partie de fixation (37) d'un outil (19 ; 19A) comportent chacune un trou (40 ; 41), l'élément d'assemblage (38) s'étendant au travers du trou (40) de la partie arrière (33) d'un outil (19 ; 19A) et au travers du trou (41) de la partie de fixation (37) de l'outil (19 ; 19A) adjacent de manière à solidariser entre eux ces deux outils (19 ; 19A) adjacents.

8. Dispositif d'implantation de semence dans le sol selon l'une quelconque des revendications 1 à 7, ***caractérisé en ce*** que chaque outil (19 ; 19A) est flexible.

9. Dispositif d'implantation de semence dans le sol selon la revendication 8, ***caractérisé en ce*** que chaque outil (19 ; 19A) est réalisé dans un matériau flexible.

10. Dispositif d'implantation de semence dans le sol selon la revendication 8 ou 9, **caractérisé en ce** qu'il est prévu une butée (42 ; 42A) destinée à limiter la flexion des outils (19; 19A).

11. Dispositif d'implantation de semence dans le sol selon la revendication 10, ***caractérisé en ce*** que la butée (42) est formée d'une plaque d'appui (43) au moins sensiblement plane.

12. Dispositif d'implantation de semence dans le sol selon les revendications 1 et 11, ***caractérisé en ce*** que la plaque d'appui (43) est raccordée à la partie de fixation (37) de l'outil (19) correspondant par l'intermédiaire d'une forme arrondie (44).

13. Dispositif d'implantation de semence dans le sol selon la revendication 11 ou 12, ***caractérisé en ce*** qu'il est prévu une deuxième forme arrondie (44') au moins sensiblement tangente à la plaque d'appui (43) de la butée (42).

14. Dispositif d'implantation de semence dans le sol selon les revendications 1 et 10, ***caractérisé en ce*** que la butée (42A) est formée par une plaque d'appui (43A) de forme arrondie au moins sensiblement tangente à la partie de fixation (37) de l'outil (19A).

15. Dispositif d'implantation de semence dans le sol selon les revendications 11, 12, 13 ou 14 dans leur dépendance à la revendication 6, ***caractérisé en ce*** que, en vue suivant l'axe de rotation (23 ; 23A) de l'élément rotatif (17 ; 17A), la plaque d'appui (43 ; 43A) d'un outil (19 ; 19A) s'éloigne progressivement de la partie arrière (33) de la partie active (31 ; 31A) de l'outil (19 ; 19A) adjacent.

16. Dispositif d'implantation de semence dans le sol selon les revendications 1 et 5, ***caractérisé en ce*** que au moins la partie de fixation (37) et la partie arrière (33) d'un outil (19 ; 19A) s'étendent chacune au moins sensiblement radialement à l'axe de rotation (23 ; 23A) de l'élément rotatif (17 ; 17A).

17. Dispositif d'implantation de semence dans le sol selon l'une quelconque des revendications 1 à 16, ***caractérisé en ce*** que chaque outil (19 ; 19A) comporte une plaque.

18. Dispositif d'implantation de semence dans le sol selon la revendication 17, ***caractérisé en ce*** que chaque outil (19 ; 19A) est formé par une tôle.

19. Dispositif d'implantation de semence dans le sol selon la revendication 17, ***caractérisé en ce*** que chaque outil (19 ; 19A) est en matière plastique.

20. Dispositif d'implantation de semence dans le sol selon l'une quelconque des revendications 1 à 19, ***caractérisé en ce*** qu'au moins la forme complémentaire (30) de chaque outil (19 ; 19A) est d'une dureté différente de la dureté du support central (20).

21. Dispositif d'implantation de semence dans le sol selon la revendication 20, ***caractérisé en ce*** qu'au moins la forme complémentaire (30) de chaque outil (19 ; 19A) est d'une dureté supérieure à celle du support central (20).

22. Dispositif d'implantation de semence dans le sol selon la revendication 2 et l'une quelconque des revendications 3 à 21, ***caractérisé en ce*** que quelques uns au moins desdits éléments rotatifs (17 ; 17A), sont réunis en un même rouleau (21 ; 21A) et que chaque groupe d'outils (25 ; 25A) est décalé angulairement autour de l'axe longitudinal du rouleau (21 ; 21 A) par rapport au groupe d'outils (25 ; 25A) voisin.

23. Dispositif d'implantation de semence dans le sol selon la revendication 2 et l'une quelconque des revendications 3 à 22, ***caractérisé en ce*** que les outils (19 ; 19A) d'un même groupe (25 ; 25A) sont au moins sensiblement identiques.

24. Semoir comportant un dispositif (9) de stockage de la semence, un dispositif (10) de dosage de la semence, un dispositif (11) de distribution et de véhiculage de la semence véhiculant la semence depuis le dispositif (10) de dosage jusqu'à un dispositif (12 ; 12A) d'implantation de semence dans le sol, ***caractérisé en ce*** que ledit dispositif (12 ; 12A) d'implantation de semence dans le sol est un dispositif selon l'une quelconque des revendications 1 à 23.

25. Machine combinée de travail du sol et de semis comportant une machine agricole (4) de préparation d'un lit de semence et un semoir (5), ***caractérisée en ce*** que le semoir (5) est un semoir selon la revendication 24.

## Claims

1. Device for planting seed in the ground, intended to equip a seeder, the said device for planting seed in the ground comprising:
- a carrying structure (16);
- a rotary element (17; 17A) guided in rotation in the said carrying structure (16) about an axis of rotation (23; 23A), the said rotary element (17; 17A) comprising a central support (20) and tools (19; 19A) fixed to the said central support (20); and
- at least one pipe for guiding and planting seed in the ground (18) passing in the vicinity of the central support (20) of the rotary element (17; 17A) and, during work, at least partially close to the corresponding lateral edge of the respective tools (19; 19A) of the said rotary element (17; 17A),
- ***characterized in*** that:
- the central support (20) is a round section piece (27);
- each tool (19; 19A) has a complementary shape (30) following the section piece (27), an at least substantially flat active part (31; 31A) extending at least substantially radially to the central support (20), and an substantially flat attachment part (37) which originates at the other end (35') of the complementary shape (30) of the tool (19; 19A);
- each tool (19; 19A) is attached to the said central support (20) via clamping means (29) allowing the tools (19; 19A) to be attached to the central support (20), the said clamping means (29) consists of the tools (19; 19A) themselves and of at least one assembly element (38) connecting at least two tools (19; 19A) of one same group together so that the rear part (33) of the active part (31; 31A) of a tool (19, 19A) bears against the attachment part (37) of the adjacent tool (19; 19A).

2. Device for planting seed in the ground according to Claim 1, ***characterized in*** that the tools (19; 19A) are attached to the central support (20) so that they are at least substantially radial to the axis of rotation (23; 23A) of the rotary element (17; 17A) and in at least one group (25; 25A).

3. Device for planting seed in the ground according to Claim 1 or 2, ***characterized in*** that the rotary element (17; 17A) comprises at least two adjacent tools (19; 19A) per group (25; 25A) which are at least substantially uniformly spaced around the central support (20) of the said rotary element (17; 17A).

4. Device for planting seed in the ground according to any one of Claims 1 to 3, ***characterized in*** that the active part (31; 31A) of the tool (19; 19A) comprises an outer part (32; 32A) of a certain width, directed substantially transversely to a direction of forward travel (24) during work, the said outer part (32; 32A) being provided with an outer edge (34; 34A) which is also directed substantially transversely to the said direction of forward travel (24) during work, preferably at least substantially horizontally and at least substantially at right angles to the said direction of forward travel (24) during work.

5. Device for planting seed in the ground according to any one of Claims 1 to 4, ***characterized in*** that the active part (31; 31A) of the tool (19, 19A) comprises a rear part (33) which originates at one (35) of the ends (35, 35') of the complementary shape (30) of the said tool (19; 19A).

6. Device for planting seed in the ground according to any one of Claims 1 to 5, ***characterized in*** that each tool (19; 19A) bears with its complementary shape (30) directly on said central support (20) with a view to its being clamped to the said central support (20).

7. Device for planting seed in the ground according to any one of Claims 1 to 6, ***characterized in*** that the rear part (33) of the active part (31; 31A) and the attachment part (37) of a tool (19; 19A) each comprise a hole (40; 41), the assembly element (38) extending through the hole (40) in the rear part (33) of a tool (19; 19A) and through the hole (41) in the attachment part (37) of the adjacent tool (19; 19A) so as to secure these two adjacent tools (19; 19A) together.

8. Device for planting seed in the ground according to any one of Claims 1 to 7, ***characterized in*** that each tool (19; 19A) is flexible.

9. Device for planting seed in the ground according to Claim 8, ***characterized in*** that each tool (19; 19A) is made of a flexible material.

10. Device for planting seed in the ground according to Claim 8 or 9, ***characterized in*** that there is a stop (42; 42A) intended to limit the bending of the tools (19; 19A).

11. Device for planting seed in the ground according to Claim 10, ***characterized in*** that the stop (42) is formed by an at least substantially flat thrust plate (43).

12. Device for planting seed in the ground according to Claims 1 and 11, ***characterized in*** that the thrust plate (43) is connected to the attachment part (37) of the corresponding tool (19) via a rounded shape (44).

13. Device for planting seed in the ground according to Claim 11 or 12, ***characterized in*** that there is a second rounded shape (44') at least substantially tangential to the thrust plate (43) of the stop (42).

14. Device for planting seed in the ground according to Claims 1 and 10, ***characterized in*** that the stop (42A) is formed by a thrust plate (43A) of rounded shape at least substantially tangential to the attachment part (37) of the tool (19A).

15. Device for planting seed in the ground according to Claims 11, 12, 13 or 14 in their dependence on Claim 6, ***characterized in*** that, when viewed along the axis of rotation (23; 23A) of the rotary element (17; 17A), the thrust plate (43; 43A) of a tool (19; 19A) gradually moves away from the rear part (33) of the active part (31; 31A) of the adjacent tool (19; 19A).

16. Device for planting seed in the ground according to Claims 1 and 5, ***characterized in*** that at least the attachment part (37) and the rear part (33) of a tool (19; 19A) each extend at least substantially radially to the axis of rotation (23; 23A) of the rotary element (17; 17A).

17. Device for planting seed in the ground according to any one of Claims 1 to 16, ***characterized in*** that each tool (19; 19A) comprises a plate.

18. Device for planting seed in the ground according to Claim 17, ***characterized in*** that each tool (19; 19A) is formed by a metal sheet.

19. Device for planting seed in the ground according to Claim 17, ***characterized in*** that each tool (19; 19A) is made of plastic.

20. Device for planting seed in the ground according to any one of Claims 1 to 19, ***characterized in*** that at least the complementary shape (30) of each tool (19; 19A) has a hardness which differs from the hardness of the central support (20).

21. Device for planting seed in the ground according to Claim 20, ***characterized in*** that at least the complementary shape (30) of each tool (19; 19A) has a hardness greater than that of the central support (20).

22. Device for planting seed in the ground according to Claim 2 and any one of Claims 3 to 21, ***characterized in*** that at least some of the said rotary elements (17; 17A) are brought together into one and the same roller (21; 21A) and in that each group of tools (25; 25A) is angularly offset about the longitudinal axis of the roller (21; 21A) with respect to the next group of tools (25; 25A).

23. Device for planting seed in the ground according to Claim 2 and any one of Claims 3 to 22, ***characterized in*** that the tools (19; 19A) of one same group (25; 25A) are at least substantially identical.

24. Seeder comprising a device (9) for storing seed, a device (10) for metering the seed, a device (11) for distributing and conveying the seed, conveying the seed from the metering device (10) to a device (12; 12A) for planting seed in the ground, ***characterized in*** that the said device (12; 12A) for planting seed in the ground is a device according to any one of Claims 1 to 23.

25. Combined soil-working and seeding machine comprising an agricultural machine (4) for preparing a seedbed and a seeder (5), ***characterized in*** that the seeder (5) is a seeder according to Claim

## Patentansprüche

1. Vorrichtung zum Einbringen von Saatgut in den Boden zur Ausrüstung einer Sämaschine, wobei die Vorrichtung zum Einbringen von Saatgut in den Boden
- ein Traggestell (16);
- ein in dem Traggestell (16) um eine Drehachse (23; 23A) drehbar geführtes Drehelement (17; 17A), das einen Zentralträger (20) und an diesem befestigte Werkzeuge (19; 19A) aufweist; und
- mindestens eine Leitung (18) zum Führen und Einbringen von Saatgut in den Boden, die in der Nähe des Zentralträgers (20) des Drehelements (17; 17A) und im Betrieb zumindest teilweise in der Nähe des entsprechenden Seitenrands der jeweiligen Werkzeuge (19; 19A) des Drehelements (17; 17A) verläuft, umfaßt,
***dadurch gekennzeichnet,*** daß
- der Zentralträger (20) ein rundes Profil (27) aufweist;
- jedes Werkzeug (19; 19A) eine komplementäre Form (30), die dem Profil (27) angepaßt ist, einen zumindest im wesentlichen ebenen wirksamen Teil (31; 31A), der sich im wesentlichen radial zum Zentralträger (20) erstreckt, und einen im wesentlichen ebenen Befestigungsteil (37), der von dem anderen Ende (35') der komplementären Form (30) des Werkzeugs (19; 19A) ausgeht, aufweist;
- jedes Werkzeug (19; 19A) durch ein Klemmittel (29), mittels dessen die Werkzeuge (19; 19A) an dem Zentralträger (20) befestigt werden können, an dem Zentralträger (20) befestigt ist und das Klemmittel (29) aus den Werkzeugen (19; 19A) selbst und mindestens einem Montageelement (38) besteht, das mindestens zwei Werkzeuge (19; 19A) einer gleichen Gruppe so miteinander verbindet, daß der hintere Teil (33) des wirksamen Teils (31; 31A) eines Werkzeugs (19; 19A) an dem Befestigungsteil (37) des benachbarten Werkzeugs (19; 19A) anliegt.

2. Vorrichtung zum Einbringen von Saatgut in den Boden nach Anspruch 1, ***dadurch gekennzeichnet,*** daß die Werkzeuge (19; 19A) zumindest im wesentlichen radial zur Drehachse (23; 23A) des Drehelements (17; 17A) und in mindestens einer Gruppe (25; 25A) an dem Zentralträger (20) befestigt sind.

3. Vorrichtung zum Einbringen von Saatgut in den Boden nach Anspruch 1 oder 2, ***dadurch gekennzeichnet,*** daß das Drehelement (17; 17A) mindestens zwei benachbarte Werkzeuge (19; 19A) pro Gruppe (25; 25A) aufweist, die zumindest im wesentlichen gleichmäßig um den Zentralträger (20) des Drehelements (17; 17A) herum beabstandet sind.

4. Vorrichtung zum Einbringen von Saatgut in den Boden nach irgend einem der Ansprüche 1 bis 3, ***dadurch gekennzeichnet,*** daß der wirksame Teil (31; 31A) des Werkzeugs (19; 19A) einen äußeren Teil (32; 32A) mit einer bestimmten Breite aufweist, der im wesentlichen quer zu einer Arbeitsvorschubrichtung (24) ausgerichtet ist, wobei der äußere Teil (32; 32A) mit einem Außenrand (34; 34A) versehen ist, der ebenfalls im wesentlichen quer zur Arbeitsvorschubrichtung (24), vorzugsweise zumindest im wesentlichen horizontal und zumindest im wesentlichen senkrecht zur Arbeitsvorschubrichtung (24) ausgerichtet ist.

5. Vorrichtung zum Einbringen von Saatgut in den Boden nach irgend einem der Ansprüche 1 bis 4, ***dadurch gekennzeichnet,*** daß der wirksame Teil (31; 31A) des Werkzeugs (19; 19A) einen hinteren Teil (33) aufweist, der von einem (35) der Enden (35; 35') der komplementären Form (30) des Werkzeugs (19; 19A) ausgeht.

6. Vorrichtung zum Einbringen von Saatgut in den Boden nach irgend einem der Ansprüche 1 bis 5, ***dadurch gekennzeichnet,*** daß jedes Werkzeug (19; 19A) zum Festklemmen an dem Zentralträger (20) mit seiner komplementären Form (30) direkt am Zentralträger (20) anliegt.

7. Vorrichtung zum Einbringen von Saatgut in den Boden nach irgend einem der Ansprüche 1 bis 6, ***dadurch gekennzeichnet,*** daß der hintere Teil (33) des wirksamen Teils (31; 31A) und der Befestigungsteil (37) eines Werkzeugs (19; 19A) jeweils ein Loch (40; 41) aufweisen, wobei sich das Montageelement (38) durch das Loch (40) des hinteren Teils (33) eines Werkzeugs (19; 19A) und durch das Loch (41) des Befestigungsteils (37) des benachbarten Werkzeugs (19; 19A) erstreckt, so daß es diese beiden benachbarten Werkzeuge (19; 19A) fest miteinander verbindet.

8. Vorrichtung zum Einbringen von Saatgut in den Boden nach irgend einem der Ansprüche 1 bis 7, ***dadurch gekennzeichnet,*** daß jedes Werkzeug (19; 19A) biegsam ist.

9. Vorrichtung zum Einbringen von Saatgut in den Boden nach Anspruch 8, ***dadurch gekennzeichnet,*** daß jedes Werkzeug (19; 19A) aus einem biegsamen Material hergestellt ist.

10. Vorrichtung zum Einbringen von Saatgut in den Boden nach Anspruch 8 oder 9, ***dadurch gekennzeichnet,*** daß ein Anschlag (42; 42A) vorgesehen ist, der das Durchbiegen der Werkzeuge (19; 19A) begrenzen soll.

11. Vorrichtung zum Einbringen von Saatgut in den Boden nach Anspruch 10, ***dadurch gekennzeichnet,*** daß der Anschlag (42) aus einer zumindest im wesentlichen ebenen Anlageplatte (43) gebildet ist.

12. Vorrichtung zum Einbringen von Saatgut in den Boden nach Anspruch 1 und 11, ***dadurch gekennzeichnet,*** daß die Anlageplatte (43) durch eine abgerundete Form (44) mit dem Befestigungsteil (37) des entsprechenden Werkzeugs (19) verbunden ist.

13. Vorrichtung zum Einbringen von Saatgut in den Boden nach Anspruch 11 oder 12, ***dadurch gekennzeichnet,*** daß eine zweite abgerundete Form (44') vorgesehen ist, die zumindest im wesentlichen tangential zur Anlageplatte (43) des Anschlags (42) verläuft.

14. Vorrichtung zum Einbringen von Saatgut in den Boden nach den Ansprüchen 1 und 10, ***dadurch gekennzeichnet,*** daß der Anschlag (42A) durch eine Anlageplatte (43A) mit abgerundeter Form gebildet wird, die zumindest im wesentlichen tangential zum Befestigungsteil (37) des Werkzeugs (19A) verläuft.

15. Vorrichtung zum Einbringen von Saatgut in den Boden nach den Ansprüchen 11, 12, 13 oder 14, sofern sie von Anspruch 6 abhängig sind, ***dadurch gekennzeichnet,*** daß sich die Anlageplatte (43; 42A) eines Werkzeugs (19; 19A) mit Blickrichtung entlang der Drehachse (23; 23A) des Drehelements (17; 17A) allmählich von dem hinteren Teil (33) des wirksamen Teils (31; 31A) des benachbarten Werkzeugs (19; 19A) entfernt.

16. Vorrichtung zum Einbringen von Saatgut in den Boden nach den Ansprüchen 1 und 5, ***dadurch gekennzeichnet,*** daß sich zumindest der Befestigungsteil (37) und der hintere Teil (33) eines Werkzeugs (19; 19A) jeweils zumindest im wesentlichen radial zur Drehachse (23; 23A) des Drehelements (17; 17A) erstrecken.

17. Vorrichtung zum Einbringen von Saatgut in den Boden nach irgend einem der Ansprüche 1 bis 16, ***dadurch gekennzeichnet,*** daß jedes Werkzeug (19; 19A) eine Platte aufweist.

18. Vorrichtung zum Einbringen von Saatgut in den Boden nach Anspruch 17, ***dadurch gekennzeichnet,*** daß jedes Werkzeug (19; 19A) durch ein Blech gebildet wird.

19. Vorrichtung zum Einbringen von Saatgut in den Boden nach Anspruch 17, ***dadurch gekennzeichnet,*** daß jedes Werkzeug (19; 19A) aus Kunststoff besteht.

20. Vorrichtung zum Einbringen von Saatgut in den Boden nach irgend einem der Ansprüche 1 bis 19, ***dadurch gekennzeichnet,*** daß zumindest die komplementäre Form (30) jedes Werkzeugs (19; 19A) eine andere Härte aufweist als der Zentralträger (20).

21. Vorrichtung zum Einbringen von Saatgut in den Boden nach Anspruch 20, ***dadurch gekennzeichnet,*** daß zumindest die komplementäre Form (30) jedes Werkzeugs (19; 19A) eine größere Härte aufweist als der Zentralträger (20).

22. Vorrichtung zum Einbringen von Saatgut in den Boden nach Anspruch 2 und irgend einem der Ansprüche 3 bis 21, ***dadurch gekennzeichnet,*** daß zumindest einige der Drehelemente (17; 17A) an einer gleichen Walze (21; 21A) vereinigt sind und daß jede Werkzeuggruppe (25; 25A) bezüglich der benachbarten Werkzeuggruppe (25; 25A) winkelförmig um die Längsachse der Walze (21; 21A) herum versetzt ist.

23. Vorrichtung zum Einbringen von Saatgut in den Boden nach Anspruch 2 und irgend einem der Ansprüche 3 bis 22, ***dadurch gekennzeichnet,*** daß die Werkzeuge (19; 19A) einer gleichen Gruppe (25; 25A) zumindest im wesentlichen identisch sind.

24. Sämaschine mit einer Vorrichtung (9) zur Lagerung des Saatguts, einer Vorrichtung (10) zur Dosierung des Saatguts, einer Vorrichtung (11) zur Verteilung und zur Beförderung des Saatguts von der Dosiervorrichtung (10) zur Vorrichtung (12; 12A) zum Einbringen von Saatgut in den Boden, ***dadurch gekennzeichnet,*** daß die Vorrichtung (12; 12A) zum Einbringen von Saatgut in den Boden eine Vorrichtung nach irgend einem der Ansprüche 1 bis 23 ist.

25. Kombinierte Maschine zur Bodenbearbeitung und zum Säen, die eine Landmaschine (4) zur Saatbettvorbereitung und eine Sämaschine (5) umfaßt, ***dadurch gekennzeichnet,*** daß die Sämaschine (5) eine Sämaschine nach Anspruch 24 ist.
